# EUROPÄISCHE PATENTSCHRIFT

(11) **EP 1 072 077 B1**
(45) Veröffentlichungstag und Bekanntmachung des Hinweises auf die Patenterteilung: **05.03.2003**
(21) Anmeldenummer: 99926246.2
(22) Anmeldetag: 14.04.1999
(51) Int. Cl.: H02H 9/04, H01H 71/02, H01H 50/02

(54) **VERBRAUCHERABZWEIG MIT ENTSTÖRMODUL**
LOAD FEEDER WITH INTERFERENCE SUPPRESSION MODULE
ALIMENTATION D'UNE CHARGE AVEC MODULE ANTIPARASITES

(30) Priorität: 17.04.1998 DE 19817231
(43) Veröffentlichungstag der Anmeldung: 31.01.2001
(73) Patentinhaber: SIEMENS AKTIENGESELLSCHAFT, 80333 München (DE); Murrelektronik GmbH, 71570 Oppenweiler (DE)
(72) Erfinder: GEBHARD, Josef, D-92224 Amberg (DE); HERNES, Klaus, D-92266 Ensdorf (DE); ZIMMERMANN, Norbert, D-92237 Sulzbach-Rosenberg (DE); ZIZLER, Josef, D-92272 Freudenberg (DE); LAIBLE, Helmut, D-71570 Murrhardt (DE); FRANK, Herbert, D-71570 Oppenweiler (DE); ARNOLD, Pius, D-96158 Frensdorf (DE)
(74) Vertreter: Berg, Peter, Dipl.-Ing.
(86) Internationale Anmeldenummer: DE9901128
(87) Internationale Veröffentlichungsnummer: WO99054980

(56) Entgegenhaltungen:
- DE-U- 8 906 072
- US-A- 5 606 299

## Beschreibung

Die Erfindung bezieht sich auf einen Verbraucherabzweig gemäß dem Oberbegriff des Anspruchs 1.

In einer elektrischen Anlage werden die Verbraucher üblicherweise über sogenannte Niederspannungsschaltgeräte ein- und ausgeschaltet. Ein Drehstrommotor als Verbraucher ist in der Regel über ein Schütz mit nachgeschaltetem Überlastrelais an ein mehrphasiges Netz angeschlossen. Das Schütz umfaßt in jeder zum Motor geführten Hauptstrombahn einen Schaltkontakt, der mittels eines ansteuerbaren Relais betätigt wird. Um die Beständigkeit der Wisdungsisolationsfestigkeit und/oder die elektromagnetische Verträglichkeit (EMV-Schutz zu erhöhen. wird üblicherweise der Drehstrommotor, der eine induktive Last darstellt, mit RC-Gliedern oder sogenannten Varistoren beschaltet. Eine solche, z.B. aus der DE 34 10 364 C2 bekannte Beschaltung becämpft beim Schalten der Relaisspule des Schützes auftretende Überspannungsspitzen und vermindert darüber hinaus den Kontaktabbrand der den Verbraucher ein- oder ausschaltenden Schaltgeräte. Sie schützt ferner in eingesetzten Steuerschaltungen vorhandene Halbleitarbauelemente.

Derzeit auf dem Markt erhältliche EMV-Entstörbausteine mit einer entsprechenden Bedämpfungsschaltung für die Hauptstrombahnen eines Verbraucherabzweigs werden an die entsprechenden Niederspannungsschaltgeräte über Drahtlitzen angebaut, indem diese an die Anschlußklemmen des jeweiligen Schützes angeschlossen werden. Dies hat den Nachteil, daß aufgrund der Belegung der Anschlußklemmen an diese jeweils lediglich ein zusätzlicher Leiter angeschlossen werden kann. Desweiteren ist es mittels eines derartigen Entstörbausteins zur Überspannungsbedämpfung nicht möglich, einen sicherungsbehafteten Motorabzweig mit einem Überlastrelais und mit einem Schütz modular aufzubauen.

Der Erfindung liegt daher die Aufgabe zugrunde, einen Verbraucherabzweig, insbesondere für einen Drehstrommotor, mit einem Schaltgerät und mit einer Bedämpfungsschaltung für eine Blindlast anzugeben, mit dem unter Vermeidung der genannten Nachteile ein modularer Aufbau möglich ist.

Diese Aufgabe wird erfindungsgemäß gelöst durch die Merkmale des Anspruchs 1.

Mittels eines derartigen EMV-Entstörmoduls in Form eines Adapterbausteins mit einer Anzahl von Eingangsanschlüssen, deren jeder zur Weiterführung der Hauptstrombahnen eines Schaltgerätes an den Verbraucher sowie weiterer Strombahnen zur Hilfsenergieübertragung modulintern mit einem Ausgangsanschluß verbunden ist es möglich, einen Verbraucherabzweig, insbesondere einen Motorabzweig, derart modular aufzubauen, daß auch Steuer- und Hilfsstromkreise des Verbraucherabzweigs uneingeschränkt zugänglich bleiben.

Zwar ist aus der US-PS 5,606,299 ein an ein Schaltgerät ansteckbares Entstörmodul bekannt. Dieses zur Bedämpfung der Steuersignale des Schaltgerätes dienende Entstörmodul ist jedoch als EMV-Entstörbaustein für die Hauptstrombahnen eines Verbraucherabzweigs weder vorgesehen noch geeignet.

Da sowohl die Hauptstrombahnen als auch zur Hilfsenergieübertragung vorgesehene Strombahnen über das in einfacher Weise beispielsweise an ein Schütz anschließbare Entstörmodul geführt und die Anschlußart sowie die Anschlußreihenfolge in der dem Schütz entsprechenden Weise vorgesehen sind, kann auch ein Überlastrelais des Verbrauchersbzweigs ohne zusätzlichen weiteren Verdrahtungsaufwand an das Entstörmodul angeschlossen werden. Dadurch können weiterhin je Anschlußstelle zwei Anschlußleitungen an das Entstörmodul und somit an den Verbraucherabzweig angeschlossen werden. Ferner kann in vorteilhafterweise eine erforderliche Steuerspannung für das Schaltgerät oder Schütz über das Entstörmodul eingespeist werden. Dabei ist zweckmäßigerweise der oder jeder Eingangsanschluß des Entstörmoduls ein Kontaktstift, während der oder jeder Ausgangsanschluß eine Anschlußklemme ist.

Das Entstörmodul enthält als Bedämpfungsschaltung eine der Anzahl der Hauptstrombahnen des Verbraucherabzweigs entsprechende Anzahl von RC-Gliedern oder Varistoren, die in Sternschaltung geschaltet sind. Alternativ können die RC-Glieder oder die Varistoren der Bedämpfungsschaltung innerhalb des Entstörmoduls auch in Dreiecksschaltung geschaltet sein.

Das Entstörmodul wird zweckmäßigerweise mit dem Schaltgerät oder Schütz über eine mechanische Verklinkung in der Art eines lösbaren Scharnieres verbunden. Dazu weist das Entstörmodul zweckmäßigerweise mindestens ein hakenförmiges Verbindungselement auf, das bei der Montage des Verbraucherabzweigs in ein korrespondierendes Formelement im Schaltgerät zur Herstellung einer Fügeverbindung eingeklinkt wird.

Um das Entstörmodul auch auf eine Hutschiene aufsetzen zu können, kann die Fügeverbindung auch mit einem Hutschienenadapter hergestellt werden. Das Entstörmodul kann somit als Zusatzmodul für einen nach Art eines Baukastensystems realisierten Verbraucherabzweigs oder in Verbindung mit dem Hutschienenadapter in Einzelaufstellung besonders flexibel eingesetzt werden.

Die mit der Erfindung erzielten Vorteile bestehen insbesondere darin, daß mittels eines Entstörmoduls mit einer Anzahl von Eingangsanschlüssen und Ausgangsanschlüssen zur modulinternen Weiterführung der Haupt- und Hilfsstrombahnen eines Schaltgerätes sowie mit einer modulinternen Dämpfungsschaltung zur Überspannungsbedämpfung eines Verbrauchers ein entsprechender Verbraucherabzweig modular und somit besonders einfach und flexibel aufgebaut werden kann. Durch die Bereitstellung eines entsprechenden Hutschienenadapters für das Entstörmodul kann dieses in Einzelaufstellung auch separat oder in Verbindung mit aus verschiedenen Schaltgeräten aufgebauten unterschiedlichen Verbraucherzweigen verwendet werden.

Nachfolgend werden Ausführungsbeispiele der Erfindung anhand einer Zeichnung näher erläutert. Darin zeigen:
- FIG 1: in perspektivischer Darstellung ein Entstörmodul zwischen einem Schütz und einem Überlastrelais eines Verbraucherabzweigs,
- FIG 2: den Verbraucherabzweig gemäß FIG 1 in einem Blockschaltbild,
- FIG 3: in einem Blockschaltbild das Entstörmodul mit einer Bedämpfungsschaltung aus RC-Gliedern in Sternschaltung,
- FIG 4: eine Bedämpfungsschaltung mittels RC-Gliedern in Dreiecksschaltung, und
- FIG 5: das Entstörmodul gemäß FIG 1 in Verbindung mit einem Hutschienenadapter.

Einander entsprechende Teile sind in allen Figuren mit den gleichen Bezugszeichen versehen.

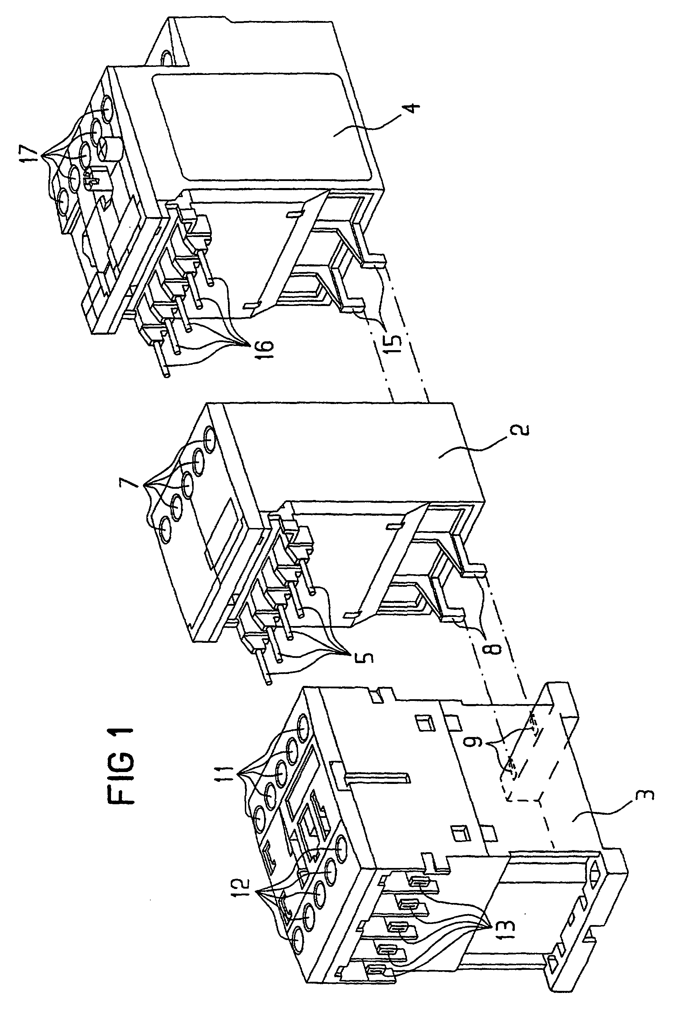

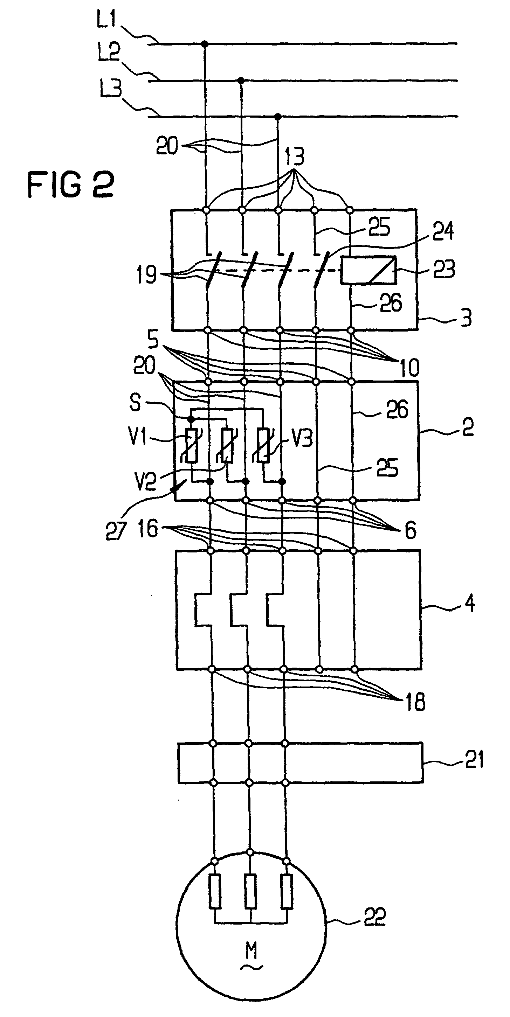

FIG 1 zeigt ein EMV-Entstörmodul 2 zwischen einem Schütz 3 und einem Überlastrelais 4 eines Verbraucherabzweigs, dessen schaltungstechnischer Aufbau in FIG 2 dargestellt ist. Das Entstörmodul 2 weist ein bezüglich dessen Abmessungen an die Gehäuseabmessungen üblicher Schaltgeräte angepaßtes Kunststoffgehäuse auf. Eine Reihe von durch das Gehäuse nach außen geführten Kontaktstiften 5 bilden die Eingangsanschlüsse des Entstörmoduls 2. Auf der gegenüberliegenden Gehäuseseite weist das Entstörmodul 2 eine entsprechende Anzahl von (nicht sichtbaren) Kontaktklemmen als Ausgangsanschlüsse 6 (FIG 2) auf, die über gehäuseoberseitig vorgesehene Durchgangsöffnungen 7 zugänglich sind.

Auf der mit den Eingangsanschlüssen 5 versehenen Gehäuseseite sind im unteren Bereich zwei hakenförmige Verbindungselemente 8 an das Entstörmodul 2 angeformt, die zur Herstellung einer Fügeverbindung mit dem Schütz 3 in dort vorgesehene korrespondierende Aufnahmeöffnungen 9 nach Art einer lösbaren Scharnierverbindung einsetzbar sind. Nach Einklinken der Verbindungselemente 8 in die Aufnahmeöffnungen 9 wird das Entstörmodul 2 gegen das Schütz 3 geschwenkt, so daß die Kontaktstifte 5 in korrespondierende Ausgangsklemmen 10 (FIG 2) des Schützes 3 eingeführt und dort verklemmt oder verschraubt werden können. Dazu weist das Schütz 3 gehäuseoberseitig wiederum Öffnungen 11 auf, über die die Ausgangsklemmen 10 von außen zugänglich sind. Auf der gegenüberliegenden Gehäuseseite des Schützes 3 sind weitere Öffnungen 12 für entsprechende Eingangsklemmen 13 vorgesehen. Lediglich das Schütz 3 weist gehäusebodenseitig eine Rastausnehmung 14 zur Befestigung des Schützes 3 und damit des Verbraucherabzweigs auf einer (nicht dargestellten) Hutschiene auf.

Analog wird auch das Überlastrelais 4 mittels entsprechender hakenförmiger Verbindungen 15 mit dem Entstörmodul 2 mechanisch verklinkt und über eingangsseitige Kontaktstifte 16, die in die entsprechenden Kontaktklemmen 6 des Entstörmoduls 2 geführt werden, elektrisch verbunden. Ausgangsseitig weist das Überlastrelais 4 wiederum über gehäuseoberseitig vorgesehene Öffnungen 17 zugängliche Anschlußklemmen 18 (FIG 2) auf.

FIG 2 zeigt anhand eines Blockschaltbilds den Anschluß des Entstörmoduls 2 innerhalb des Verbraucherabzweigs an ein dreiphasiges Leiternetz L1,L2,L3. Dabei sind die innerhalb des Schützes 3 über dessen drei Schaltkontakte 19 geführten Hauptstrombahnen 20 modulintern über das Entstörmodul 2 zum Überlastrelais 4 weiter geführt. Das im Ausführungsbeispiel als Bimetall-Relais realisierte Überlastrelais 4 ist ausgangsseitig mit einer Anschlußleiste 21 elektrisch verbunden, an die ein Drehstrommotor 22 angeschlossen ist. Die Schaltkontakte 19 des Schützes 3 in den Hauptstrombahnen 20 werden innerhalb des Schützes 3 mittels eines Auslöserelais 23 betätigt. Ein Hilfskontakt oder -schalter 24, der in einer Hilfsstrombahn 25 liegt, wird ebenfalls vom Auslöserelais 23 betätigt. Eine weitere, wiederum durch das Entstörmodul 2 und über das Überlastrelais 4 geführten Steuerstrombahn 26 dient zur Hilfsenergieübertragung für die Ansteuerung des Auslöserelais 23. Dabei sind die entsprechenden Strombahnen 20, 25 und 26 innerhalb des Entstörmoduls 2 mit den entsprechenden Eingangsanschlüssen 5 und Ausgangsanschlüssen 6 elektrisch verbunden. Dadurch kann eine erforderliche Hilfsoder Steuerspannung dem Schütz 3 auch über das Entstörmodul 2 zugeführt werden.

Um Überspannungsspitzen beim Schalten des Schützes 3 und damit beim Ein- oder Ausschalten des eine induktive Last darstellenden Drehstrommotors 22 zu bedämpfen, weist das Entstörmodul 2 modulintern eine Bedämpfungsschaltung 27 auf. Diese umfaßt im Ausführungsbeispiel gemäß FIG 2 eine der Anzahl der Hauptstrombahnen 20 entsprechenden Anzahl von Varistoren V1 bis V3 auf, die einerseits mit einem gemeinsamen Sternpunkt S und andererseits mit jeweils einer der Hauptstrombahnen 20 verbunden sind.

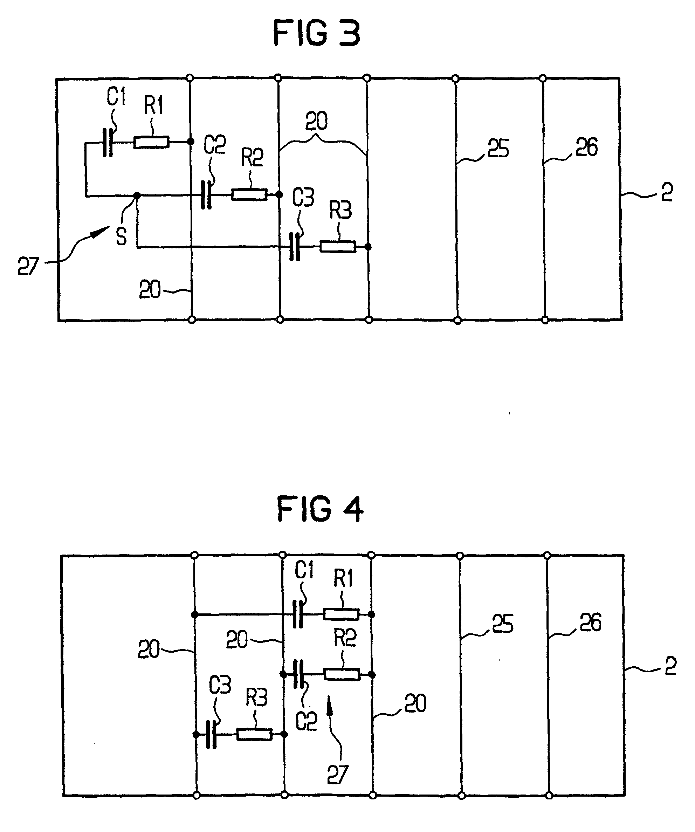

Die Figuren 3 und 4 zeigen alternative Ausführungen der Bedämpfungsschaltung 27 innerhalb des Entstörmoduls 2 mit RC-Gliedern in Stern- bzw. Dreiecksschaltung. Dazu ist gemäß dem Ausführungsbeispiel nach FIG 3 wiederum ausgehend vom einem gemeinsamen Sternpunkt S jeweils eine Reihenschaltung aus einem Kondensator C1,C2,C3 und einem Widerstand R1,R2,R3 an jeweils eine der Hauptstrombahnen 20 geführt. Bei der Dreiecksschaltung gemäß FIG 4 sind die RC-Glieder C1,R1 und C2,R2 sowie C3,R3 jeweils zwischen zwei Hauptstrombahnen 20 geschaltet. Auch bei der Dreiecksschaltung können anstelle der RC-Glieder zwischen die Hauptstrombahnen 20 Varistoren V1 bis V3 geschaltet sein.

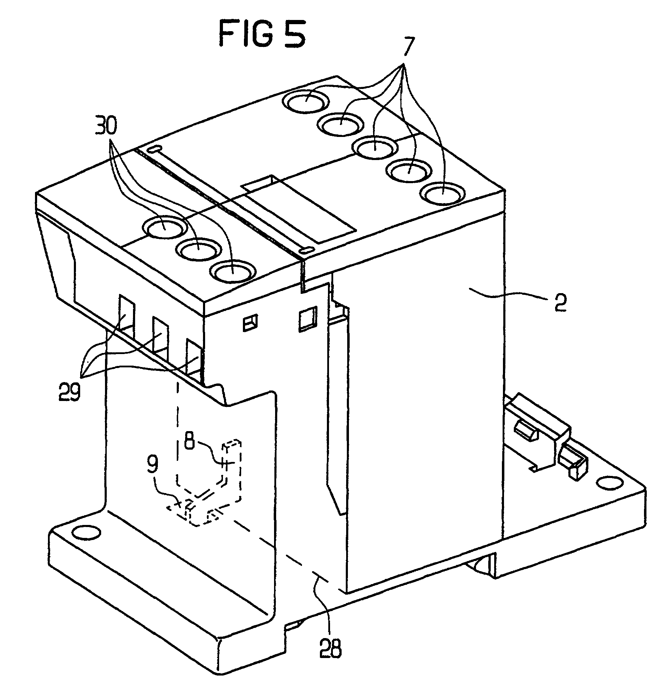

FIG 5 zeigt das Entstörmodul 2 in Verbindung mit einem Hutschienenadapter 28. Dazu ist das Entstörmodul 2 - analog zu der in FIG 1 dargestellten Fügeverbindung - mit dem Hutschienenadapter 28 einerseits mechanisch verklinkt und andererseits über die Eingangsanschlüsse 5 zumindest der Hauptstrombahnen 20 lösbar verbunden. Die elektrische Kontaktierung erfolgt über korrespondierende Eingangsklemmen 29, die wiederum über adapteroberseitig vorgesehene Öffnungen 30 zugänglich sind. Die Eingangsklemmen 29 sind zur Weiterführung der Hauptstrombahnen 20 intern mit den entsprechenden Kontaktstiften 5 des Entstörmoduls 2 elektrisch verbunden. Das Entstörmodul 2 wird in dieser Verbindung mit dem Hutschienenadapter 28 vorzugsweise in Einzelaufstellung verwendet.

## Patentansprüche

1. Verbraucherabzweig mit einem Schaltgerät (3) und mit einer Bedämpfungsschaltung (27) zur Überspannungsbedämpfung eines über Hauptstrombahnen (20) des Schaltgerätes (3) an ein mehrphasiges Netz (L1 bis L3) anschließbaren Verbrauchers (22), **gekennzeichnet durch** ein die Bedämpfungsschaltung (27) enthaltendes Entstörmodul (2) mit einer Anzahl von Eingangsanschlüssen (5), deren jeder zur Weiterführung der Hauptstrombahnen (20) des Schaltgerätes (3) an den Verbraucher (22) mit einem Ausgangsanschluß (5) verbunden ist, wobei modulintern mindestens eine weitere Strombahn (25,26) zur Hilfsenergieübertragung vorgesehen ist, die mit einem der Eingangsanschlüsse (5) und mit einem der Ausgangsanschlüsse (5) elektrisch verbunden ist.

2. Verbraucherabzweig nach Anspruch 1,
**dadurch gekennzeichnet, daß** der oder jeder Eingangsanschluß ein Kontaktstift (5) und der oder jeder Ausgangsanschluß eine Kontaktklemme (6) ist.

3. Verbraucherabzweig nach Anspruch 1 oder 2,
**dadurch gekennzeichnet, daß** die Bedämpfungsschaltung (27) eine der Anzahl der Hauptstrombahnen (20) entsprechende Anzahl von RC-Gliedern (C1,R1 bis C3,R3) oder Varistoren (V1 bis V3) in Sternschaltung oder in Dreieckschaltung umfaßt.

4. Verbraucherabzweig nach einem der Ansprüche 1 bis 3,
**dadurch gekennzeichnet, daß** das Entstörmodul (2) mindestens ein hakenförmiges Verbindungselement (8) für eine Fügeverbindung mit einem korrespondierenden Formelement (9) eines Hutschienenadapters (28) oder des Schaltgerätes (3) aufweist.

5. Verbraucherabzweig nach einem der Ansprüche 1 bis 4, **gekennzeichnet durch** ein ausgangsseitig mit dem Entstormodul (2) verbundenes Überlastrelais (4).

## Claims

1. Consumer tap with a switching device (3) and a damping circuit (27) for overvoltage damping of a consumer (22) which can be connected to a polyphase network (L1 to L3) via main circuits (20) of the switching device (3), **characterised by** an anti-interference module (2) containing the damping circuit (27) with a number of input ports (5), each of which is connected to an output port (6) in order to pass the main circuits (20) of the switching device (3) to the consumer (22), whereby in the interior of the module at least one other conducting path (25, 26) is provided for transmission of auxiliary power, which is electrically connected to one of the input ports (5) and to one of the output ports (6).

2. Consumer tap according to Claim 1, **characterised in that** the input port, or every input port, is a contact pin (5) and the output port, or every output port, is a contact terminal (6).

3. Consumer tap according to Claim 1 or 2, **characterised in that** the damping circuit (27) comprises a number of star-connected or delta-connected RC elements (C1, R1 to C3, R3) or varistors (V1 to V3), said number corresponding to the number of main circuits (20).

4. Consumer tap according to one of Claims 1 to 3, **characterised in that** the anti-interference module (2) has at least one hook-like connection element (8) for a joint connection with a corresponding form feature (9) of a top-hat rail adapter (28) or of the switching device (3).

5. Consumer tap according to one of Claims 1 to 4, **characterised in that** on the output side it has an overload relay (4) connected to the anti-interference module (2).

## Revendications

1. Ensemble de branchement à une charge, comportant un module de commutation (3) et un circuit d'amortissement (27) destiné à amortir les surtensions d'une charge (22) raccordable à un réseau polyphasé (L1 à L3) par des trajets de courant principal (20) du module de commutation (3), **caractérisé par** un module antiparasites (2) contenant le circuit d'amortissement (27) et comportant un certain nombre de connexions d'entrée (5), reliées chacune à une connexion de sortie (6), en vue de prolonger les trajets de courant principal (20) du module de commutation (3) vers la charge (22), au moins un autre trajet de courant (25, 26) étant prévu à l'intérieur du module en vue de transmettre de l'énergie auxiliaire, lequel autre trajet de courant est relié électriquement à l'une des connexions d'entrée (5) et à l'une des connexions de sortie (6).

2. Ensemble de branchement à une charge selon la revendication 1, **caractérisé en ce que** la connexion d'entrée, ou chaque connexion d'entrée, est une broche de connexion (5) et la connexion de sortie, ou chaque connexion de sortie, est une borne de connexion (6).

3. Ensemble de branchement à une charge selon la revendication 1 ou 2, **caractérisé en ce que** le circuit d'amortissement (27) comporte un nombre d'éléments RC (C1, R1 à C3, R3) ou de varistances (V1 à V3), montés en étoile ou en triangle, correspondant au nombre de trajets de courant principal (20).

4. Ensemble de branchement à une charge selon l'une des revendications 1 à 3, **caractérisé en ce que** le module antiparasites (2) comporte au moins un élément de liaison (8) en forme de crochet pour une liaison par encochage avec un élément (9) de forme correspondante d'un adaptateur de profilé chapeau (28) ou du module de commutation (3).

5. Ensemble de branchement à une charge selon l'une des revendications 1 à 4, **caractérisé par** un relais de surcharge (4) relié à la sortie du module antiparasites (2).
